# EUROPEAN PATENT SPECIFICATION

(11) **EP 3 724 277 B1**
(45) Date of publication and mention of the grant of the patent: **27.10.2021**
(21) Application number: 18738339.3
(22) Date of filing: 13.07.2018
(51) Int. Cl.: C09D 5/16

(54) **SUBSTRATE COATED WITH A MULTI-LAYER COATING SYSTEM AND A PROCESS FOR CONTROLLING AQUATIC BIOFOULING ON MAN-MADE OBJECTS USING SUCH MULTI-LAYER COATING SYSTEM**
FÄULNISTRENNSCHICHTZUSAMMENSETZUNG, MIT SOLCH EINER BESCHICHTUNGSZUSAMMENSETZUNG BESCHICHTETES SUBSTRAT UND VERWENDUNG SOLCH EINER BESCHICHTUNGSZUSAMMENSETZUNG
COMPOSITION DE REVÊTEMENT ANTI-SALISSURES, SUBSTRAT REVÊTU DE CETTE COMPOSITION DE REVÊTEMENT ET UTILISATION D'UNE TELLE COMPOSITION DE REVÊTEMENT

(30) Priority: 14.12.2017 EP 17207444
(43) Date of publication of application: 21.10.2020
(73) Proprietor: Akzo Nobel Coatings International B.V., 1077 WW Amsterdam (NL)
(72) Inventor: SINCLAIR-DAY, John David, Tyne and Wear NE39 2AG (GB); REYNOLDS, Kevin John, Gateshead Tyne and Wear NE10 8BU (GB); CAIRNS, Cait Marie, Tyne and Wear NE30 4JP (GB); HAMILTON, Lindsay, Crook Durham DL15 0UN (GB); PARRY, Alison Louise, Durham DH1 2DS (GB); DUNFORD, Graeme, Tyne and Wear NE34 6NQ (GB); PRICE, Clayton, Whitley Bay Tyne and Wear NE25 9JY (GB)
(74) Representative: Akzo Nobel IP Department
(86) International application number: PCT/EP2018/069083
(87) International publication number: WO 2019/115021

(56) References cited:
- WO-A1-2012/146023
- WO-A1-2015/131032

## Description

### Field of the Invention

The present invention relates to a substrate coated with a multi-layer coating system and to a process for controlling aquatic biofouling on man-made objects using such multi-layer coating system.

### Background of the Invention

Man-made structures such as ship and boat hulls, buoys, drilling platforms, dry dock equipment, oil production rigs, aquaculture equipment and netting and pipes which are immersed in water, or have water running through them, are prone to fouling by aquatic organisms such as green and brown algae, barnacles, mussels, and the like. Such structures often are of metal, but may also be made of other structural materials such as concrete, glass re-enforced plastic or wood. Such fouling is a nuisance on ship and boat hulls, because it increases frictional resistance during movement through the water. As a consequence speed is reduced and fuel consumption increased. It is a nuisance on static structures such as the legs of drilling platforms and oil and gas production, refining and storage rigs, firstly because the resistance of thick layers of fouling to waves and currents can cause unpredictable and potentially dangerous stresses in the structure, and, secondly, because fouling makes it difficult to inspect the structure for defects such as stress cracking and corrosion. It is a nuisance in pipes such as cooling water intakes and outlets, because the effective cross-sectional area is reduced by fouling, with the consequence that flow rates are reduced.

It is known, that coatings with polysiloxane-based resins resist fouling by aquatic organisms. Such coatings are for example disclosed in GB 1307001 and US 3,702,778. It is believed that such coatings present a surface to which the organisms cannot easily adhere, and they can accordingly be called fouling release or fouling resistant rather than anti-fouling coatings. Silicone rubbers and silicone compounds generally have very low toxicity.

In WO 2014/131695 is described an anti-fouling composition comprising a curable organosiloxane-containing polymer and a fluorinated oxyalkylene-containing polymer or oligomer.

Coating compositions based on curable polysiloxane resins are relatively soft at room temperature. In order to improve the mechanical properties of polysiloxane coatings, polysiloxane based coatings have been blended or crosslinked with stronger polymers such as epoxy resins or polyurethanes.

In WO 2012/146023 is disclosed a one-package moisture curable coating composition comprising 10-99 wt% silane terminated polyurethane and 1-90 wt% silane terminated polysiloxane. The polyurethane and the polysiloxane self-crosslink to form an organic-inorganic hybrid network. Microphase separation occurs at the surface and polysiloxane forms a surface structure with low surface energy that provides foul release properties.

In WO 2013/107827 is disclosed a coating composition, for use as a tie coat or a top coat in a foul release coating, comprising a curable polysiloxane and a silane terminated polyurethane. The curable polysiloxane and the silane terminated polyurethane are designed to co-cure.

Although very good in providing foul release properties, an important disadvantage of polysiloxane resins is that many other resins do not adhere to surfaces contaminated with polysiloxane resins. So, if a surface is contaminated with polysiloxane resin due to overspray or spilling of a polysiloxane-based coating, such surface has to be cleaned before a primer or other coating can be applied to it. Contamination of coating compositions based on non-polysiloxane based resins with a small amount of a polysiloxane-based composition, also has a negative impact on aesthetics of the coating. It typically causes pin hole and fish eye effects. Therefore, separate equipment for polysiloxane-based and non-polysiloxane-based coating has to be used. Even coating compositions containing a very small amount of polysiloxane resin give rise to contamination issues.

There is a need in the art for foul release coating systems that do not give rise to contamination issues whilst having good foul release and mechanical properties and having good adhesion to a substrate.

### Summary of the Invention

Surprisingly it has now been found that a multiple layer coating system comprising a tie-coat layer deposited from a tie-coat composition based on a binder polymer obtainable by copolymerizing a mixture of ethylenically unsaturated monomers and comprising curable alkoxysilyl functional groups, and a foul release topcoat deposited from a foul release coating composition comprising a curable polymer with an organic polymer backbone with terminal and/or pendant alkoxysilyl groups and essentially free of curable polysiloxane, provides good foul release properties and good adhesion to a substrate without giving rise to contamination issues.

Accordingly, in a first aspect the invention provides a substrate coated with a multi-layer coating system comprising:
a) optionally a primer layer applied to the substrate and deposited from a primer coating composition;
b) a tie-coat layer applied to the substrate or to the optional primer layer, deposited from a tie-coat composition comprising a binder polymer obtainable by copolymerizing a mixture of ethylenically unsaturated monomers, the binder polymer comprising curable alkoxysilyl functional groups; and
c) a topcoat layer applied to the tie-coat layer, the topcoat layer deposited from a non-aqueous liquid foul release coating composition comprising a curable resin system comprising
   i) a curable polymer having a backbone selected from a polyurethane, a polyether, a polyester, a polycarbonate or a hybrid of two or more thereof, and having at least one terminal or pendant alkoxysilyl group of formula

      -(CₘH₂ₘ)-Si(R¹)₍₃₋ₙ₎(OR²)ₙ (I)

      wherein:
      n is 1, 2 or 3, preferably 2 or 3;
      each of R¹ and R² is, independently, an alkyl radical having 1 to 6 carbon atoms, preferably 1 to 4 carbon atoms;
      m is an integer with a value in the range of from 1 to 20, and optionally
   ii) a curing agent and/or a catalyst,
   wherein the non-aqueous liquid foul release coating composition is essentially free of a curable polysiloxane.

The coated substrate according to the invention has foul release properties that are similar to or even better than substrates coated with compositions based on polysiloxane resins. The coated substrate, moreover, has ice-release properties. An important advantage of the foul release coating composition used to obtain the coated substrate according to the invention is that surfaces contaminated with small amounts of the foul release coating composition can be coated with a primer or a topcoat without a negative impact on adhesion or aesthetics. A further advantage is that the foul release coating composition used to obtain the coated substrate according to the invention provides coated substrates with improved mechanical properties, in particular abrasion resistance, compared to substrates coated with top-coat compositions based on polysiloxane resins.

When the optional primer layer, the tie-coat layer and the foul release coating composition have been applied and dried, cured or crosslinked, the coated substrate according to the invention can be immersed and gives protection against fouling. As indicated above, the foul release coating composition provides coatings with very good fouling-resistant and foul release properties. This makes these coating compositions very suitable for coating objects that are immersed in an aquatic environment, such as marine and aquaculture applications. The multi-layer coating system can be applied to substrates that form the surface of both dynamic and static structures, such as ship and boat hulls, buoys, drilling platforms, oil production rigs, floating production storage and offloading vessels (FPSO), floating storage and regasification units (FSRU), cooling water intake in power plants, fish nets or fish cages and pipes which are immersed in water.

In a second aspect, the invention provides a process for controlling aquatic biofouling on a surface of a man-made object, comprising the steps of:
(a) optionally applying a primer layer on at least part of the surface of the man-made object;
(b) applying a tie-coat layer deposited from a tie-coat composition as specified hereinbefore on at least part of the surface of the man-made object, or on the primer layer applied in step (a);
(c) applying a foul release coating composition as specified in any one of hereinbefore to the applied tie-coat layer;
(d) allowing the tie-coat composition and the foul release coating composition to cure to form a cured tie-coat layer and a cured foul release coating layer; and
(e) immersing the man-made object at least partly in water.

### Detailed description of the Invention

The coated substrate according to the invention is coated with a multi-layer coating system. The multi-layer coating system optionally has a first primer layer a) deposited from a primer coating composition; such layer is directly applied to the substrate. The multi-layer coating system has a tie-coat layer b) that is directly applied to the substrate, or, in case the multi-layer coating system comprises a primer layer, to the primer layer. The multi-layer coating system has a top-coat layer c) applied to tie-coat layer b) and deposited from a non-aqueous liquid foul release coating composition.

It will be appreciated that each layer (primer, tie-coat, topcoat) of the multi-layer coating system may be applied by applying a single layer or multiple layers of the relevant coating composition.

### Foul release coating composition

The foul release coating composition from which topcoat layer c) is deposited is a non-aqueous liquid coating composition. It comprises a curable resin system comprising i) a curable polymer and ii) optionally a curing agent (crosslinking agent) and/or a curing catalyst. The foul release coating composition may further comprise organic solvent, pigments, and one of more additives commonly used in non-aqueous liquid coating compositions. The coating composition system is essentially free of a curable polysiloxane.

Reference herein to a curable polysiloxane is to a polymer with a backbone having Si-O-Si linkages, with at least some of the silicon atoms attached to a carbon atom, and having pendant and/or terminal cross-linkable functional groups. Reference herein to cross-linkable functional groups is to groups that can self-condense or condense with a cross-linking agent to form covalent cross-links when applied under normal conditions, typically at a temperature between -10 °C and 50 °C, such as for example pendant or terminal silanol, alkoxysilyl, acetoxysilyl or oximesilyl groups.

Reference herein to pendant groups is to lateral, i.e. non-terminal, groups.

Reference herein to 'essentially free of curable polysiloxane' is to a composition comprising less than 0.5 wt%, preferably less than 0.1 wt% curable polysiloxane, more preferably a composition entirely free of curable polysiloxane.

The foul release coating composition is a liquid coating composition. This means that the composition is liquid at ambient temperature and can be applied at ambient conditions to a substrate by well-known application techniques for liquids, such as brushing, rolling, dipping, bar application or spraying.

The foul release coating composition is a non-aqueous coating composition. This means that the components of the resin system and other ingredients of the coating composition are provided, e.g. dissolved or dispersed, in a non-aqueous liquid medium. The foul release coating composition may comprise an organic solvent to achieve the required application viscosity. Alternatively, the foul release coating composition may be free of organic solvent, for example when the curable polymer, optionally after addition of a reactive diluent and/or liquid plasticizer, is a liquid of sufficiently low viscosity. The foul release coating composition may comprise a small amount of water, for example water unintentionally introduced with other components of the coating composition, such as pigments or organic solvents, which contain low amounts of water as impurity. The foul release coating composition preferably comprises less than 5 wt% of water, more preferably less than 2 wt%, based on the total weight of the composition. Even more preferably, the composition is free of water.

The curable polymer (i) has a backbone that is a polyurethane, a polyether, polyester, a polycarbonate, or a hybrid of two or more thereof. Reference herein to a polyurethane backbone is to a backbone with urethane linkages. Such backbone is formed by reacting a mixture of polyol and polyisocyanate, preferably di-isocyanate. Any suitable polyol or polyisocyanate may be used. Suitable polyols for examples include polyester polyol, polyether polyol, polyoxyalkylene polyols, acrylic polyol, polybutadiene polyol, natural oil derived polyols. In case the polyol is a polyether polyol, the polymer backbone has both urethane and ether linkages and is referred to herein as a polyether/polyurethane hybrid. In case the polyol is a polyester polyol, the polymer backbone has both urethane and ester linkages and is referred to herein as a polyester/polyurethane hybrid. Preferably, the curable polymer (i) has a backbone that is a polyurethane, a polyether, or a polyether/polyurethane hybrid.

The curable polymer (i) has at least one alkoxysilyl terminal or pendant group of formula (I):

-(CₘH₂ₘ)-Si(R¹)₍₃₋ₙ₎(OR²)ₙ (I)

wherein:
n is 1, 2 or 3, preferably 2 or 3;
each of R¹ and R² is, independently, an alkyl radical having 1 to 6 carbon atoms, preferably 1 to 4 carbon atoms;
m is an integer with a value in the range of from 1 to 20.

Bivalent saturated hydrocarbon radical CₘH₂ₘ is linking alkoxysilyl group - Si(R¹)₍₃₋ₙ₎(OR²)ₙ to the backbone of curable polymer i), preferably via a urethane or urea linkage. Preferably, m is an integer with a value in the range of from 1 to 6. More preferably, m is 1 or 3. If m is 1, the curable alkoxysilyl group(s) are in the alpha position to the urethane or urea linkage. Such alpha position provides higher reactivity of the alkoxysilyl group(s) and therewith higher curing rates.

The alkoxysilyl terminal or pendant group may have one, two or three alkoxy groups OR², preferably two or three alkoxy groups (n is 2 or 3). The alkoxy groups OR² preferably are methoxy or ethoxy groups (R² being a methyl or ethyl radical). In case of one or two alkoxy groups, two or one alkyl radicals R¹ are attached to the silicon atom, respectively. R¹ is an alkyl radical having 1 to 20 carbon atoms, preferably 1 to 6 carbon atoms. More preferably, R¹ is a methyl or ethyl radical.

Preferably, curable polymer (i) has at least one terminal alkoxysilyl group of formula (I), more preferably at least two terminal alkoxysilyl groups of formula (I).

Curable polymer (i) may be linear or branched. Preferably, curable polymer (i) is essentially linear and has two terminal alkoxysilyl groups of formula (I). The curable polymer (i) may have pendant and terminal alkoxysilyl groups of formula (I).

Curable polymer (i) is preferably free of fluorine atoms.

Curable polymers with an organic polymer backbone and alkoxysilyl groups of formula (I) are known in the art and for example described in US 5,990,257. Such polymers may for example be prepared by reacting an isocyanate functionalized alkoxysilane with a hydroxyl-terminated prepolymer such as a polyether polyol, a polyurethane polyol or a polyether-polyurethane hybrid polyol or by reacting an amino alkoxysilane with an isocyanate terminated prepolymer, such as an isocyanate terminated polyurethane or polyether-polyurethane hybrid. Commercially available examples of such curable polymers include GENIOSIL ® STP-E (ex. Wacker), Desmoseal S XP 2636, Desmoseal S XP 2749 (ex. Covestro), TEGOPAC SEAL 100, Polymer ST 61 LV and Polymer ST 80 (ex. Evonik).

The resin system of the foul release coating composition may comprise a further curable polymer other than curable polymer (i). If such further curable polymer is present, the further curable polymer preferably is a curable polymer comprising pendant and/or terminal alkoxysilyl functional groups, for example a poly(meth)acrylate comprising pendant alkoxysilyl groups. Such further curable polymer comprising pendant and/or terminal alkoxysilyl functional groups may be present in an amount up to 80 wt%, preferably up to 70 wt%, more preferably in the range of from 10 to 60 wt%, based on the total weight of curable polymer (i) and any further curable polymer with alkoxysilyl functional groups.

The foul release coating composition may comprise a further curable polymer without alkoxysilyl functional groups. Such further curable polymer without alkoxysilyl functional groups is preferably present in an amount less than 50 wt% based on the total weight of curable polymer (i) and any further curable polymer with alkoxysilyl functional groups, more preferably less than 30 wt%, even more preferably less than 10 wt%. Even more preferably, the resin system of the foul release coating composition is essentially free of or entirely free of curable polymers without alkoxysilyl functional groups. The coating composition is essentially free of a curable polysiloxane.

The curable resin system of the foul release coating composition preferably comprises a curing agent or a curing catalyst. The resin system may comprise both a curing agent and a curing catalyst.

The curing agent (also referred to as cross-linking agent) may be any curing agent suitable for crosslinking the terminal or pendant alkoxysilyl groups of curable polymer (i). Such curing agents are known in the art. Functional silanes are known as suitable curing agents. Preferred curing agents include tetra-alkoxy orthosilicates (also referred to as tetra-alkoxysilanes), such as for example tetra-ethylorthosilicate or partial condensates thereof, and organofunctional alkoxysilanes, such as amino alkoxysilanes, glycidoxy alkoxysilanes, methacryloxy alkoxysilanes, carbamato alkoxysilanes, and alkoxysilanes with an isocyanurate functional group. Examples of particularly suitable curing agents are tetra-ethylorthosilicate or partial condensates thereof, N-[3-(trimethoxysilyl)propyl]ethylenediamine, and (N,N-diethylaminomethyl) triethoxysilane.

The curing agent may be used in any suitable amount, typically up to 10 wt% based on the total weight of the resin system (weight of curable polymer plus curing agent plus optional catalyst), preferably in the range of from 1 to 5 wt%.

In case an organofunctional alkoxysilane with the alkoxysilyl functionality in an alpha position to the organofunctional group is used as curing agent, the coating composition may be cured under ambient conditions in the absence of a curing catalyst. Suitable organofunctional alkoxysilanes with the alkoxysilyl functionality in an alpha position to the organofunctional group include alpha aminosilanes. (N,N-diethylaminomethyl)triethoxysilane is a particularly preferred alpha aminosilane.

Instead of a curing agent, or in addition to a curing agent, the resin system may comprise a curing catalyst. Any catalyst suitable for catalyzing the condensation reaction between silanol groups may be used. Such catalysts are well known in the art and include carboxylic acid salts of various metals, such as tin, zinc, iron, lead, barium, and zirconium. Such salts preferably are salts of long-chain carboxylic acids, for example dibutyltin dilaurate, dioctyltin dilaurate, dibutyltin dioctoate, iron stearate, tin (II) octoate, and lead octoate. Further examples of suitable catalysts include organobismuth, organotitanium compounds, organo-phosphates such as bis(2-ethylhexyl) hydrogen phosphate. Other possible catalysts include chelates, for example dibutyltin acetoacetonate, or compound comprising amine-ligands such as for example 1,8-diazabicyclo(5.4.0)undec-7-ene. The catalyst may comprise a halogenated organic acid which has at least one halogen substituent on a carbon atom which is in the [alpha]-position relative to the acid group and/or at least one halogen substituent on a carbon atom which is in the beta position relative to the acid group, or a derivative which is hydrolysable to form such an acid under the conditions of the condensation reaction. Alternatively, the catalyst may be as described in any of WO 2007/122325, WO 2008/055985, WO 2009/106717, WO 2009/106718.

The catalyst may be used in any suitable amount, preferably in the range of from 0.1 to 10 wt% based on the total weight of the resin system (weight of curable polymer plus optional curing agent plus catalyst), more preferably in the range of from 0.2 to 1.0 wt%.

If the curable resin system comprises a curing catalyst, the coating composition is preferably a two-component (2K) coating composition wherein the curing catalyst and the curable polymer of the curable resin system are provided in different components that are mixed shortly before application of the coating composition.

To provide enhanced protection against fouling, the coating composition may comprise a marine biocide and/or a non-curable, non-volatile compound (an incompatible fluid). Reference herein to a non-curable compound is to a compound that does not participate in the curing reaction of curable polymer (i) or any further curing polymer in the resin system of the foul release coating composition. Reference herein to non-volatile compounds is to compounds that do not boil at a temperature below 250 °C, at atmospheric pressure.

Suitable examples of such non-curable, non-volatile compounds include silicone oils, fluorinated polymers, sterols and sterol derivatives, such as for example lanolin, lanolin oil, or acetylated lanolin, and hydrophilic-modified polysiloxane oils, such as poly(oxyalkylene)-modified polysiloxane oils. Examples of commercially available suitable silicone oils are Rhodorsil Huile 510V100 and Rhodorsil Huile 550 from Bluestar Silicones. Examples of suitable fluorinated polymers include linear and branched trifluoromethyl fluorine end-capped perfluoropolyethers (e.g. Fomblin Y®, Krytox K® fluids, or Demnum S® oils); linear di-organo (OH) end-capped perfluoropolyethers (eg Fomblin Z DOL®, Fluorolink E®); low molecular weight polychlorotrifluoroethylenes (eg Daifloil CTFE® fluids); and fluorinated oxyalkylene-containing polymer or oligomer as described in WO 2014/131695. Non-curable hydrophilic-modified polysiloxane oils are known in the art and for examples described at pages 22 to 26 of WO 2013/000479, incorporated herein by reference for the description of such non-curable hydrophilic-modified polysiloxane oils. Such non-curable hydrophilic-modified polysiloxane oils do not comprise any terminal or lateral silanol, alkoxysilyl, or other silicon-reactive groups.

Preferably, the foul release coating composition comprises a non-curable, non-volatile compound. More preferably, the foul release coating composition comprises a non-curable, non-volatile compound selected from the group consisting of fluorinated polymers, sterols and sterol derivatives, and hydrophilic-modified polysiloxane oils.

Even more preferably, the coating composition comprises a non-curable, non-volatile compound selected from the group consisting of hydrophilic-modified polysiloxane oils, even more preferably from the group consisting of poly(oxyalkylene)-modified polysiloxane oils. Such poly(oxyalkylene)-modified polysiloxane oil may have pendant and/ terminal poly(oxyalkylene) groups and/or may have a polyoxyalkylene chain incorporated in its backbone. Preferably, the poly(oxyalkylene)-modified polysiloxane oil has pendant poly(oxyalkylene) groups.

The poly(oxyalkylene)-modified polysiloxane oil preferably comprises oxyalkylene moieties with 1 to 20 carbon atoms, more preferably with 2 to 6 carbon atoms, even more preferably comprises oxyethylene and/or oxypropylene moieties. The pendant, terminal or block co-polymerized poly(oxyalkylene) groups preferably comprise 1 to 50 oxyalkylene moieties, more preferably 2 to 20 oxyalkylene moieties. The polysiloxane oil may comprise in the range of from 1 to 100 pendant/terminal poly(oxyalkylene) groups and/or 1 to 100 copolymerized poly(oxyalkylene) blocks, preferably in the range of from 1 to 50, more preferably of from 2 to 20. A particularly suitable hydrophilic-modified polysiloxane oil is a polydimethylsiloxane comprising pendant poly(oxyethylene) groups and comprising pendant alkyl groups other than methyl groups.

The pendant or terminal oxyalkylene moieties are preferably linked to a silicon atom of the polysiloxane backbone via a divalent hydrocarbon group, preferably a divalent hydrocarbon group having 1 to 8 carbon atoms, more preferably three carbon atoms. The pendant or terminal poly(oxyalkylene) groups may be capped with any suitable group, preferably a hydroxyl, ether, or ester group, more preferably a hydroxyl group or an ether or ester group with two to 6 carbon atoms, such as for example an acetate group.

Commercially available examples of suitable hydrophilic-modified polysiloxane include DC5103, DC Q2-5097, DC193, DC Q4-3669, DC Q4-3667, DC-57 and DC2-8692 (all Dow Corning), Silube J208 (Siltech), and BYK333 (BYK). A non-curable, non-volatile compound may be added in any suitable amount, typically up to 20 wt% based on the total weight of the coating composition, preferably in the range of from 1 to 10 wt%, more preferably of from 2 to 7 wt%.

Reference herein to a marine biocide is to a chemical substance known to have chemical or biological biocidal activity against marine or freshwater organisms. Suitable marine biocides are well-known in the art and include inorganic, organometallic, metal-organic or organic biocides. Examples of inorganic biocides include copper compounds such as copper oxide, copper thiocyanate, copper bronze, copper carbonate, copper chloride, copper nickel alloys, and silver salts such as silver chloride or nitrate; organometallic and metal-organic biocides include zinc pyrithione (the zinc salt of 2-pyridinethiol-1-oxide), copper pyrithione, bis (N-cyclohexyl-diazenium dioxy) copper, zinc ethylene-bis(dithiocarbamate) (i.e. zineb), zinc dimethyl dithiocarbamate (ziram), and manganese ethylene-bis(dithiocarbamate) complexed with zinc salt (i.e. mancozeb); and organic biocides include formaldehyde, dodecylguanidine monohydrochloride, thiabendazole, N-trihalomethyl thiophthalimides, trihalomethyl thiosulphamides, N-aryl maleimides such as N-(2,4,6-trichlorophenyl) maleimide, 3-(3,4-dichlorophenyl)-1,1-dimethylurea (diuron), 2,3,5,6-tetrachloro-4-(methylsulphonyl) pyridine, 2-methylthio-4-butylamino-6-cyclopopylamino-s-triazine, 3-benzo[b]thien-yl-5,6-dihydro-1,4,2-oxathiazine 4-oxide, 4,5-dichloro-2-(n-octyl)-3(2H)-isothiazolone, 2,4,5,6-tetrachloroisophthalonitrile, tolylfluanid, dichlofluanid, diiodomethyl-p-tosylsulphone, capsciacin or a substituted capsciacin, N-cyclopropyl-N'-(1,1-dimethylethyl)-6-(methylthio)-1,3,5-triazine-2,4-diamine, 3-iodo-2-propynylbutyl carbamate, medetomidine, 1,4-dithiaanthraquinone-2,3-dicarbonitrile (dithianon), boranes such as pyridine triphenylborane, a 2-trihalogenomethyl-3-halogeno-4-cyano pyrrole derivative substituted in position 5 and optionally in position 1, such as 2-(p-chlorophenyl)-3-cyano-4-bromo-5-trifluoromethyl pyrrole (tralopyril), and a furanone, such as 3-butyl-5-(dibromomethylidene)-2(5H)-furanone, and mixtures thereof, macrocyclic lactones such as avermectins, for example avermectin B1, ivermectin, doramectin, abamectin, amamectin and selamectin, and quaternary ammonium salts such as didecyldimethylammonium chloride and an alkyldimethylbenzylammonium chloride.

Optionally, the biocide is wholly or partially encapsulated, adsorbed, entrapped, supported or bound. Certain biocides are difficult or hazardous to handle and are advantageously used in an encapsulated, entrapped, absorbed, supported, or bound form. Encapsulation, entrapment, absorption, support or binding of the biocide can provide a secondary mechanism for controlling biocide leaching from the coating system in order to achieve an even more gradual release and long lasting effect. The method of encapsulation, entrapment, adsorption, support or binding of the biocide is not particularly limiting for the present invention. Examples of ways in which an encapsulated biocide may be prepared for use in the present invention include mono and dual walled amino-formaldehyde or hydrolysed polyvinyl acetate-phenolic resin capsules or microcapsules as described in EP 1 791 424. An example of a suitable encapsulated biocide is encapsulated 4,5-dichloro-2-(n-octyl)-3(2H)-isothiazolone marketed by Dow Microbial Control as Sea-Nine 211N R397 Marine Antifouling Agent. Examples of ways in which an absorbed or supported or bound biocide may be prepared include the use of host-guest complexes such as clathrates as described in EP 709 358, phenolic resins as described in EP 880 892, carbon-based adsorbents such as those described in EP 1 142 477, or inorganic microporous carriers such as the amorphous silicas, amorphous aluminas, pseudoboehmites or zeolites described in EP 1 115 282.

In view of environmental and health concerns linked to the use of biocides in coatings for the prevention of aquatic biofouling, the foul release coating composition is preferably free of marine biocide.

Therefore, in a preferred embodiment, the coating composition is essentially or entirely free of a marine biocide and enhanced protection against fouling is provided by a non-biocidal component, said non-biocidal component being a non-curable, non-volatile compound selected from the group consisting of fluorinated polymers, sterols and sterol derivatives, and hydrophilic-modified polysiloxane oils.

Suitable solvents for use in the foul release coating composition include aromatic hydrocarbons, alcohols, ketones, esters, and mixtures of the above with one another or an aliphatic hydrocarbon. Preferable solvents include ketones such as methyl isopentyl ketone and/or hydrocarbon solvents, such as xylene, trimethyl benzene, or aliphatic cyclic or acyclic hydrocarbons, as well as mixture thereof.

The foul release coating composition may further comprise extender pigments (fillers) and/or color pigments and one or more additives commonly used in foul release coating compositions, such as wetting agents, dispersing agents, flow additives, rheology control agents, adhesion promoters, antioxidants, UV stabilizers, and plasticizers.

Examples of suitable extender pigments include barium sulphate, calcium sulphate, calcium carbonate, silicas or silicates (such as talc, feldspar, and china clay), including pyrogenic silica, bentonite and other clays, and solid particulate non-curable silicone resins, which are generally condensed branched polysiloxanes, such as a silicone resin comprising Q units of the formula SiO_{4/2} and M units of the formula R*^{m}*₃SiO_{1/2}, wherein the R*^{m}* substituents are selected from alkyl groups having 1 to 6 carbon atoms and the ratio of M units to Q units is in the range of 0.4:1 to 1:1. Some extender pigments, such as fumed silica, may have a thixotropic effect on the coating composition. The proportion of fillers may be in the range of from 0 to 25 wt%, based on the total weight of the coating composition. Preferably clay is present in an amount of 0 to 1 wt% and preferably the thixotrope is present in an amount of 0 to 5 wt%, based on the total weight of the coating composition.

Examples of color pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, chromium oxide, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes).

The foul release coating composition may also comprises so-called barrier pigments or anticorrosive pigments such as zinc dust or zinc alloys, or so-called lubricious pigments such as graphite, molybdenum disulfide, tungsten disulphide or boron nitride.

The pigment volume concentration of the foul release coating composition preferably is in the range of 0.5-25%. The total amount of pigments may be in the range of from 0 to 25 weight %, based on the total weight of the coating composition.

The foul release coating composition preferably has a non-volatile content, defined as the weight percentage of non-volatile material in the coating composition, of at least 35 weight %, more preferably at least 50 weight %, even more preferably at least 70 weight %. The non-volatile content can range up to 80 weight %, 90 weight %, 95 weight % and preferably up to 100 weight %. The non-volatile content may be determined in accordance with ASTM method D2697.

To achieve good adhesion of top-coat layer c) deposited from the foul release coating composition to the substrate, the fouling-release coating composition is applied to a tie-coat layer b). Optionally, a primer layer a) is applied to the substrate before applying tie-coat layer b). The primer layer a) may be deposited from any primer composition known in the art, for example an epoxy resin-based or polyurethane based primer composition. The substrate is provided with a tie-coat layer b) deposited from a tie-coat composition, before applying a foul release coating layer c) deposited from the fouling-release coating composition as described hereinabove. The tie-coat composition may be applied to the bare substrate surface, or to a primed substrate surface.

### Tie-coat composition

The tie-coat layer is deposited from a tie-coat composition comprising a binder polymer obtainable by copolymerizing a mixture of ethylenically unsaturated monomers. The binder polymer comprises curable alkoxysilyl functional groups. capable of reacting with the pendant or terminal alkoxysilyl group(s) of curable polymer (i). Such tie-coat compositions are known in the art and for example described in WO 99/33927.

The binder polymer preferably is a polyacrylate binder polymer, i.e. a polymer obtainable by copolymerizing, typically by radical polymerisation, of esters of acrylic acid and/or methacrylic acid (also referred to as acrylate and/or methacrylate monomers), preferably C1-C16 esters of acrylic acid and/or methacrylic acid.

The alkoxysilyl functional groups preferably have the following general formula:

-(CₘH2ₘ)-Si(R¹)₍₃₋ₙ₎(OR²)ₙ

wherein n, R¹, R² and m are as defined herein above for formula (I). Preferably, n is 2 or 3. Each of R¹ and R² is, independently, preferably an alkyl radical having 1 to 4 carbon atoms, more preferably ethyl or methyl. Preferably, m is an integer with a value in the range of from 1 to 6. More preferably, m is 1 or 3, even more preferably m is 1.

In a particularly preferred embodiment, the binder polymer in the tie-coat composition is prepared by radical polymerisation of a mixture of acrylate and/or methacrylate monomers of which at least one has alkoxysilyl functionality, such as for example 3-(trimethoxysilylpropyl) methacrylate or trimethoxysilylmethyl methacrylate. An example of such monomer mixture is a mixture of methyl methacrylate, lauryl methacrylate and trimethoxysilylmethyl methacrylate.

Preferably, the binder polymer in the tie-coat composition does not have crosslinkable functional groups other than the alkoxysilyl functional groups. Each layer of the multi-layer coating system can be applied by known techniques for applying liquid coating compositions, such as brush, roller, dipping, bar or spray (airless and conventional) application.

The substrate to be coated may be a surface of a structure to be immersed in water, such as metal, concrete, wood, or polymeric substrates. Examples of polymeric substrates are polyvinyl chloride substrates or composites of fiber-reinforced resins. In an alternative embodiment, the substrate is a surface of a flexible polymeric carrier foil. The multiple layer coating system is then applied to one surface of a flexible polymeric carrier foil, for example a polyvinyl chloride carrier foil, and cured, and subsequently the non-coated surface of the carrier foil is laminated to a surface of a structure to be provided with fouling-resistant and/or foul release properties, for example by use of an adhesive.

### Examples

The invention will be further illustrated by means of the following non-limiting examples.

The following compounds were used in the examples.

### Curing agents

Gamma-aminosilane: N-[3-(trimethoxysilyl)propyl]ethylenediamine
Alpha-aminosilane: (N,N-diethylaminomethyl)triethoxysilane Tetraethylorthosilicate (TEOS)

### Curing catalysts

DBU: 1,8-diazabicyclo(5.4.0)undec-7-ene
Zinc catalyst: K-KAT® 670 (ex. King Industries)
Acid catalyst: bis(2-ethylhexyl) hydrogen phosphate

### Curable polymers

See Table 1.

### EXAMPLE 1 - curing of different polymers with silane functional groups

The curability of different, commercially available curable polymers with terminal or pendant alkoxysilyl functional groups was determined by mixing such polymers with different amounts of gamma-aminosilane or alpha-aminosilane as curing agent, or with 0.5 wt% of a curing catalyst. A 200 µm draw down of the mixture was applied on a glass panel, and the applied layer was allowed to cure at ambient conditions (23 °C, 50 % relative humidity).

The time to hard dry was determined. Hard dry means that no visible marks are made when the coating is firmly touched with a finger and the finger is rotated 180 °. After 24 hours or 1 week, the test was stopped and the drying state (wet, tacky, touch dry or hard dry) was determined.

The results are shown in Tables 2 and 3.

**Table 1 - Curable polymers used**

| Polymer name | backbone | Alkoxysilyl group | |
|---|---|---|---|
| GENIOSIL® STP-E10 | polyether | dimethoxy(methyl)silyl methylcarbamate | terminal |
| GENIOSIL ® STP-E15 | polyether | trimethoxysilyl propyl carbamate | terminal |
| GENIOSIL ® STP-E30 | polyether | dimethoxy(methyl)silyl methylcarbamate | terminal |
| GENIOSIL ® STP-E35 | polyether | trimethoxysilyl propyl carbamate | terminal |
| Desmoseal S XP 2749 | polyurethane | trialkoxysilylpropyl | terminal |
| Polymer ST 61LV | urethane/polyether hybrid | trimethoxysilyl | terminal |
| TEGOPAC SEAL 100 | polyether | triethoxysilyl | pendant |

**Table 2 Cure times until hard dry for different polymers with alpha aminosilane as curing agent or curing catalyst**

| Polymer | Alpha amino silane (wt% on wet weight) | | | Catalyst (0.5 wt%) | | |
|---|---|---|---|---|---|---|
| | 1.0 wt% | 5.0 wt% | 10 wt% | DBU | acid | zinc |
| STP-E 10 | < 24 h | 3 h | 3 h | 5 min | 1h | 1h |
| STP-E 15 | 1 week: tacky | < 24 h | < 24 h | 15 min | 5h | 7h |
| S XP 2749 | < 24 h | < 24 h | < 24 h | 30 min | 5h | 5h |
| ST 61 LV | | | | 10 min | 3h | 7h |
| SEAL 100 | | | no cure after 1 week | tacky after 24h | | 24h* |

| | | | | | | |
|---|---|---|---|---|---|---|
| * still some surface tackiness | | | | | | |

**Table 3 - Drying state after 24 hours with gamma aminosilane or amino aminosilane as curing agent**

| Polymer | Gamma amino silane | | | Alpha amino silane | | |
|---|---|---|---|---|---|---|
| | 3 wt% | 5 wt% | 10 wt% | 1 wt% | 5 wt% | 10 wt% |
| S XP 2749 | tacky | touch dry^{a} | hard dry^{b} | hard dry | hard dry | hard dry |

| | | | | | | |
|---|---|---|---|---|---|---|
| ^{a} tacky underneath;^{b} wrinkled surface | | | | | | |

### EXAMPLE 2 - Foul release performance

The foul release properties of different foul release coatings were determined in a so-called slime farm test. Different foul release coatings were applied on glass microscope slides. The coated slides were immersed in seawater for 2 weeks to remove any residual solvent. The coated slides were then placed in the recirculation reactor of a multispecies slime culturing system. This is a recirculating artificial seawater system (temperature 22 ± 2°C, salinity 33 ± 1 psu (practical salinity units), pH 8.2 ± 0.2) inoculated with a multispecies culture of wild microorganisms. The system mimics a semi-tropical environment whereby, under controlled hydrodynamic and environmental conditions, marine biofilms are cultivated and subsequently grown on coated test surfaces under accelerated conditions. After 14 days, the samples were removed and tested for biofilm release in a variable-speed hydrodynamic flow-cell. The fouled microscope slides were mounted in the flow cell, and fully turbulent seawater was passed across the surfaces. The water velocity was increased incrementally from zero to 820 liters/hour, and was remained constant at each speed for 1 minute. Before each speed increment the slides were imaged and the amount of biofilm retained on the surface as a percentage of the total area (% cover) was assessed using image analysis software (ImageJ, version1.46r, Schneider et al. 2012). The percent cover of biofilm was averaged across 6 replicate slides, and mean percent cover was compared between surfaces at each speed.

The slime farm fouling settlement and release was determined for a comparison composition with hydroxyl-terminated polydimethylsiloxane as the only curable polymer, tetraethylorthosilicate (TEOS) as curing agent, and dioctyltindilaurate as curing catalyst and compositions illustrative for coating compositions according to the invention with curable polymer (i) with terminal alkoxysilyl groups as the only binder polymer, TEOS as curing agent and a curing catalyst. In Table 4, the composition of the coating compositions applied is given. The results for specific alkoxysilyl terminated polymers are shown in Table 5.

**Table 4 - Coating compositions used in slime farm test (all components in wt%)**

| | comparison | invention |
|---|---|---|
| OH-terminated PDMS | 70.9 | - |
| Alkoxysilyl terminated polymer | - | 94.5 |
| Solvent (Xylene) | 20.7 | - |
| Curing agent (tetraethylorthosilicate) | 3.2 | 5.0 |
| Pot life extender (2,4 pentadione) | 4.6 | - |
| Catalyst (dioctyltindilaurate) | 0.6 | - |
| Catalyst (K-KAT® 670) | - | 0.5 |

**Table 5 - Percentage slime coverage for different coatings (slime farm test)**

| | Flow rate (liters/hour) | | |
|---|---|---|---|
| | 270 | 550 | 820 |
| | | | |
| OH-terminated PDMS (comparison) | 100 | 100 | 95 |
| STP-10 (invention) | 80 | 40 | 30 |
| STP-30 (invention) | 96 | 82 | 60 |
| STP-15 (invention) | 94 | 88 | 82 |
| STP-35 (invention) | 98 | 98 | 95 |
| S XP 2749 (invention) | 84 | 74 | 68 |

### EXAMPLE 3 - Adhesion to different primers/tie-coats

For different foul release coating compositions, adhesion to different primers/tie-coats was determined.

### Preparation of acrylic tie-coat composition 1

A siloxane functional polyacrylate was prepared by copolymerizing a mixture of methyl methacrylate, lauryl methacrylate and trimethoxysilylpropyl methacrylate in the presence of mercaptopropyl trimethoxysilane as chain transfer agent and 2,2'azobis(2-methylbutyronitrile (AMBN) as initiator in methyl n-amyl ketone (MAK) as solvent at 100 °C. The methyl methacrylate/lauryl methacrylate/trimethoxysilylpropyl methacrylate/ mercaptopropyltrimethoxy silane molar ratio was 70/12/15/3. A solution of 70 wt% polymer in MAK was obtained.

### Preparation of acrylic tie-coat composition 2

A siloxane functional polyacrylate was prepared as described above for acrylic tie-coat composition 1, but with trimethoxysilylmethyl methacrylate instead of trimethoxysilylpropyl methacrylate.

### Commercially available primers/tie-coats used

Intershield 300 (ex. AkzoNobel): epoxy-based primer
Intergard 263 (ex. AkzoNobel): epoxy-based primer/tie-coat
Intertuf 203 (ex. AkzoNobel): vinyl-based primer
Interprotect (ex. AkzoNobel): epoxy-amine based primer
Primocon (ex. AkzoNobel): vinyl-based primer

### Foul release coating compositions

Five foul release coating compositions were prepared, each with a composition as shown in Table 6.

**Table 6 - Foul release topcoats for adhesion test (all components in wt%)**

| | 1 | 2 | 3 | 4 | 5 |
|---|---|---|---|---|---|
| | | | | | |
| STP-E10 | 85 | 89.5 | | 40.5 | 27 |
| STP E15 | | | | | |
| STP-E35 | | | 69.5 | | |
| Polyacrylate with alkoxysilyl groups* | | | | 27 | 40.5 |
| Adhesion promoter | 1.5 | | | | |
| Curing agent (tetraethylorthosilicate) | | | | 1.5 | 1.5 |
| Zinc catalyst** | 2 | 0.5 | 0.5 | 1 | 1 |
| Solvent (xylene) | 10 | 10 | 30 | | |
| Solvent (1-methoxy-2-propanol) | | | | 30 | 30 |
| Poly(oxyethylene) modified polysiloxane oil** | | | | | |
| Adhesion promoter (chlorinated polyolefin) | 1.5 | | | | |

| | | | | | |
|---|---|---|---|---|---|
| * Same polymer as in acrylic tie-coat composition 1 ** (K-KAT® 670) *** DC-57 (ex. DOW) | | | | | |

### Adhesion test

A layer of a primer or tie-coat composition was applied directly to an uncoated glass panel. The applied layer was allowed to dry and a second layer of a foul release coating composition was applied. Adhesion between the first coat (primer or tie-coat) and the second coat (foul release coat) was determined using a penknife adhesion test. In this test, a penknife is used to cut a V-Shape into both coating layers; the level of adhesion is then assessed by inserting the point of the penknife blade under the coating at the vertex of the 'V', noting how difficult, or easy, it is to separate the second coating from the first coating.

**Table 7 - results of adhesion test**

| Primer | Foul release topcoat | | | | |
|---|---|---|---|---|---|
| | 1 | 2 | 3 | 4 | 5 |
| Acrylic tie-coat composition 1* | Very good | Very good | Very good | | |
| Acrylic tie-coat composition 2* | Very good | Very good | Very good | Very good | Very good |
| Intershield 300 | Poor | | | | |
| Intergard 263 | Poor | | | | |
| Intertuf 203 | | | Poor | | |
| Interprotect | | | | weak | passable |
| Primocon | | | | weak | passable |

| | | | | | |
|---|---|---|---|---|---|
| * applied as 70 wt% polymer in MAK | | | | | |

### EXAMPLE 4 - contamination

The impact of contamination of a surface with curable resin system on the aesthetic appearance of a subsequently applied polyurethane finish coat was determined as follows.

To an aluminum test panel primed with an epoxy-based primer, a diluted solution of a curable resin system (1 wt% in xylene) was applied using a 50 µm draw down bar. The resin was allowed to dry for 4 hours at ambient conditions.

Using a draw down bar, a polyurethane finish coating composition was applied on the dried coating in a wet thickness of 150 µm. The polyurethane coating composition was allowed to dry and the appearance of the polyurethane finish coat was determined. The appearance of the polyurethane finish coat was categorized as follows:
1. Coating 100% unaffected
2. 1% - 20% of surface area exhibiting surface defects
3. 21% - 50% of surface area exhibiting surface defects
4. Greater than 50% of surface area exhibiting surface defects

Surface defects may be in the form of pinholes, fish eyes, poor surface wetting or any other undesired surface characteristics.

The results are shown in Table 8.

**Table 8 - Contamination test**

| Contaminating curable resin system | Appearance polyurethane coat |
|---|---|
| 100 wt% moisture curable PDMS | 4 |
| 99.5 wt% STP-35 + 0.5 wt% zinc catalyst | 1 |
| 98.5 wt%STP-35 + 1 wt% PDMS + 0.5 wt% zinc catalyst | 2 |
| 94.5 wt%STP-35 + 5 wt% PDMS + 0.5 wt% zinc catalyst | 4 |
| 89.5 wt%STP-35 + 10 wt% PDMS + 0.5 wt% zinc catalyst | 4 |

## Claims

1. A substrate coated with a multi-layer coating system comprising:
a) optionally a primer layer applied to the substrate and deposited from a primer coating composition;
b) a tie-coat layer applied to the substrate or to the optional primer layer, deposited from a tie-coat composition comprising a binder polymer obtainable by copolymerizing a mixture of ethylenically unsaturated monomers, the binder polymer comprising curable alkoxysilyl functional groups; and
c) a topcoat layer applied to the tie-coat layer, the topcoat layer deposited from a non-aqueous liquid foul release coating composition comprising a curable resin system comprising
i) a curable polymer having a backbone selected from a polyurethane, a polyether, a polyester, a polycarbonate or a hybrid of two or more thereof, and having at least one terminal or pendant alkoxysilyl group of formula
-(CₘH₂ₘ)-Si(R¹)₍₃₋ₙ₎(OR²)ₙ (I)
wherein:
n is 1, 2 or 3, preferably 2 or 3;
each of R¹ and R² is, independently, an alkyl radical having 1 to 6 carbon atoms, preferably 1 to 4 carbon atoms;
m is an integer with a value in the range of from 1 to 20, and, optionally
ii) a curing agent and/or a catalyst,
wherein the non-aqueous liquid foul release coating composition is essentially free of a curable polysiloxane.

2. A substrate according to claim 1, wherein the ethylenically unsaturated monomers are esters of acrylic acid and/or methacrylic acid, preferably C1-C16 esters of acrylic acid and/or methacrylic acid.

3. A substrate according to claim 1 or 2, wherein curable polymer (i) has at least one alkoxysilyl terminal group of formula (I), preferably at least two of said terminal groups.

4. A substrate according to any one of the preceding claims, wherein the at least one terminal or pendant alkoxysilyl group is attached to the backbone of the curable polymer (i) via a urethane or a urea linkage.

5. A substrate according to any one of the preceding claims, wherein m is 1 or 3, preferably 1.

6. A substrate according to any one of the preceding claims, wherein R² is a methyl or ethyl radical.

7. A substrate according to any one of the preceding claims, wherein the curable resin system comprises a curing agent selected from the group consisting of tetra-alkoxyorthosilicates and partial condensates thereof, organofunctional alkoxysilanes, and combinations thereof, preferably the curing agent is a tetra-alkoxyorthosilicate or a partial condensate thereof, an organofunctional alkoxysilane selected from the group consisting of amino alkoxysilanes, glycidoxy alkoxysilanes, methacryloxy alkoxysilanes, carbamato alkoxysilanes, and alkoxysilanes with an isocyanurate functional group, or a combination thereof.

8. A substrate according to claim 7, wherein the curing agent is an organofunctional alkoxysilane with the alkoxysilyl functionality in an alpha position to the organofunctional group, preferably the curing agent is (N,N-diethylaminomethyl)triethoxysilane, and the coating composition is essentially free of a curing catalyst.

9. A substrate according to any one of the preceding claims, wherein the foul release coating composition is free of a marine biocide.

10. A substrate according to any one of the preceding claims, wherein the foul release coating composition comprises a non-curable, non-volatile compound.

11. A substrate according to claim 10, wherein the non-curable, non-volatile compound is selected from the group consisting of fluorinated polymers, sterols and sterol derivatives, and hydrophilic-modified polysiloxane oils, preferably from the group consisting of hydrophilic-modified polysiloxane oils.

12. A substrate according to claim 11, wherein the foul release coating composition comprises a non-curable, non-volatile hydrophilic-modified polysiloxane oil and the non-curable, non-volatile hydrophilic-modified polysiloxane oil is a poly(oxyalkylene)-modified polysiloxane.

13. A substrate according to any one of the preceding claims, wherein the curable polymer (i) is free of fluorine atoms.

14. A process for controlling aquatic biofouling on a surface of a man-made object, comprising the steps of
(a) optionally applying a primer layer on at least part of the surface of the man-made object;
(b) applying a tie-coat layer deposited from a tie-coat composition as specified in claim 1 or 2 on at least part of the surface of the man-made object, or on the primer layer applied in step (a);
(c) applying a foul release coating composition as specified in any one of claims 1 to 13 to the applied tie-coat layer;
(d) allowing the tie-coat composition and the foul release coating composition to cure to form a cured tie-coat layer and a cured foul release coating layer; and
(e) immersing the man-made object at least partly in water.

## Patentansprüche

1. Substrat, das mit einem mehrschichtigen Beschichtungssystem beschichtet ist, das Folgendes umfasst:
a) gegebenenfalls eine auf das Substrat aufgebrachte und aus einer Grundierungsbeschichtungszusammensetzung abgeschiedene Grundierungsschicht;
b) eine auf das Substrat oder auf die fakultative Grundierungsschicht aufgetragene, aus einer Verbindungsbeschichtungszusammensetzung, die ein durch Copolymerisieren einer Mischung von ethylenisch ungesättigten Monomeren erhältliches Bindemittelpolymer umfasst, abgeschiedene Verbindungsbeschichtungsschicht, wobei das Bindemittelpolymer härtbare funktionelle Alkoxysilylgruppen umfasst; und
c) eine auf die Verbindungsbeschichtungsschicht aufgebrachte Deckschicht, wobei die Deckschicht aus einer nichtwässrigen flüssigen Foul-Release-Beschichtungszusammensetzung abgeschieden wird, die ein härtbares Harzsystem umfasst, das Folgendes umfasst:
i) ein härtbares Polymer mit einer Hauptkette, ausgewählt aus einem Polyurethan, einem Polyether, einem Polyester, einem Polycarbonat oder einem Hybrid von zwei oder mehr davon, und mit mindestens einer end- oder seitenständigen Alkoxysilylgruppe der Formel
-(CₘH₂ₘ)-Si(R¹)₍₃₋ₙ₎(OR²)ₙ (I),
wobei:
n für 1, 2 oder 3, vorzugsweise 2 oder 3, steht;
R¹ und R² jeweils unabhängig für einen Alkylrest mit 1 bis 6 Kohlenstoffatomen, vorzugsweise 1 bis 4 Kohlenstoffatomen, stehen;
m für eine ganze Zahl mit einem Wert im Bereich von 1 bis 20 steht,
und gegebenenfalls
ii) ein Härtungsmittel und/oder einen Katalysator,
wobei die nichtwässrige flüssige Foul-Release-Beschichtungszusammensetzung im Wesentlichen frei von härtbarem Polysiloxan ist.

2. Substrat nach Anspruch 1, wobei es sich bei den ethylenisch ungesättigten Monomeren um Ester der Acrylsäure und/oder Methacrylsäure, vorzugsweise C1-C16-Ester der Acrylsäure und/oder Methacrylsäure, handelt.

3. Substrat nach Anspruch 1 oder 2, wobei das härtbare Polymer (i) mindestens eine endständige Alkoxysilylgruppe der Formel (I), vorzugsweise mindestens zwei der endständigen Gruppen, aufweist.

4. Substrat nach einem der vorhergehenden Ansprüche, wobei die mindestens eine end- oder seitenständige Alkoxysilylgruppe über eine Urethan- oder Harnstoffbindung an die Hauptkette des härtbaren Polymers (i) gebunden ist.

5. Substrat nach einem der vorhergehenden Ansprüche, wobei m für 1 oder 3, vorzugsweise 1, steht.

6. Substrat nach einem der vorhergehenden Ansprüche, wobei R² für einen Methyl- oder Ethylrest steht.

7. Substrat nach einem der vorhergehenden Ansprüche, wobei das härtbare Harzsystem ein Härtungsmittel aus der Gruppe bestehend aus Tetraalkoxyorthosilikaten und Teilkondensaten davon, organofunktionellen Alkoxysilanen und Kombinationen davon umfasst, vorzugsweise das Härtungsmittel ein Tetraalkoxyorthosilikat oder ein Teilkondensat davon, ein organofunktionelles Alkoxysilan aus der Gruppe bestehend aus Aminoalkoxysilanen, Glycidyloxyalkoxysilanen, Methacryloxyalkoxysilanen, Carbamatoalkoxysilanen und Alkoxysilanen mit einer funktionellen Isocyanuratgruppe oder eine Kombination davon ist.

8. Substrat nach Anspruch 7, wobei das Härtungsmittel ein organofunktionelles Alkoxysilan mit der Alkoxysilylfunktionalität in einer Alpha-Position zur organofunktionellen Gruppe ist, vorzugsweise das Härtungsmittel (N,N-Diethylaminomethyl)triethoxysilan ist, und die Beschichtungszusammensetzung im Wesentlichen frei von Härtungskatalysator ist.

9. Substrat nach einem der vorhergehenden Ansprüche, wobei die Foul-Release-Beschichtungszusammensetzung frei von Marinebiozid ist.

10. Substrat nach einem der vorhergehenden Ansprüche, wobei die Foul-Release-Beschichtungszusammensetzung eine nichthärtbare, nichtflüchtige Verbindung umfasst.

11. Substrat nach Anspruch 10, wobei die nichthärtbare, nichtflüchtige Verbindung aus der Gruppe bestehend aus fluorierten Polymeren, Sterolen und Sterolderivaten und hydrophil modifizierten Polysiloxanölen, vorzugsweise aus der Gruppe bestehend aus hydrophil modifizierten Polysiloxanölen, ausgewählt ist.

12. Substrat nach Anspruch 11, wobei die Foul-Release-Beschichtungszusammensetzung ein nichthärtbares, nichtflüchtiges, hydrophil modifiziertes Polysiloxanöl umfasst und es sich bei dem nichthärtbaren, nichtflüchtigen, hydrophil modifizierten Polysiloxanöl um ein Poly(oxyalkylen)-modifiziertes Polysiloxan handelt.

13. Substrat nach einem der vorhergehenden Ansprüche, wobei das härtbare Polymer (i) frei von Fluoratomen ist.

14. Verfahren zur Bekämpfung von aquatischem Biofouling auf einer Oberfläche eines künstlich geschaffenen Objekts, das folgende Schritte umfasst:
(a) gegebenenfalls Aufbringen einer Grundierungsschicht auf mindestens einen Teil der Oberfläche des künstlich geschaffenen Objekts;
(b) Aufbringen einer Verbindungsbeschichtungsschicht, die aus einer Verbindungsbeschichtungszusammensetzung gemäß Anspruch 1 oder 2 abgeschieden wird, auf mindestens einen Teil der Oberfläche des künstlich geschaffenen Objekts oder auf die in Schritt (a) aufgebrachte Grundierungsschicht;
(c) Aufbringen einer Foul-Release-Beschichtungszusammensetzung gemäß einem der Ansprüche 1 bis 13 auf die aufgebrachte Verbindungsbeschichtungsschicht;
(d) Härtenlassen der Verbindungsbeschichtungszusammensetzung und der Foul-Release-Beschichtungszusammensetzung zur Bildung einer gehärteten Verbindungsbeschichtungsschicht und einer gehärteten Foul-Release-Beschichtungsschicht und
(e) zumindest teilweises Eintauchen des künstlich geschaffenen Objekts in Wasser.

## Revendications

1. Substrat revêtu avec un système de revêtement multicouche comprenant :
a) éventuellement une couche d'apprêt appliquée au substrat et déposée à partir d'une composition de revêtement d'apprêt ;
b) une couche d'accrochage appliquée au substrat ou à la couche d'apprêt éventuelle, déposée à partir d'une composition d'accrochage comprenant un polymère liant pouvant être obtenu par copolymérisation d'un mélange de monomères éthyléniquement insaturés, le polymère liant comprenant des groupes fonctionnels alcoxysilyle durcissables ; et
c) une couche de revêtement de finition appliquée à la couche d'accrochage, la couche de revêtement de finition déposée à partir d'une composition de revêtement antisalissures liquide non aqueuse comprenant un système de résine durcissable comprenant
i) un polymère durcissable possédant un squelette choisi parmi un polyuréthane, un polyéther, un polyester, un polycarbonate et un hybride de deux ou plus de ceux-ci, et possédant au moins un groupe alcoxysilyle terminal ou pendant de formule
-(CₘH₂ₘ)-Si(R¹)₍₃₋ₙ₎(OR²₎ₙ (I)
n étant 1, 2 ou 3, préférablement 2 ou 3 ;
chacun parmi R¹ et R² étant, indépendamment, un radical alkyle possédant 1 à 6 atomes de carbone, préférablement 1 à 4 atomes de carbone ;
m étant un entier doté d'une valeur dans la plage allant de 1 à 20, et, éventuellement
ii) un agent de durcissement et/ou un catalyseur,
la composition de revêtement antisalissures liquide non aqueuse étant essentiellement exempte de polysiloxane durcissable.

2. Substrat selon la revendication 1, les monomères éthyléniquement insaturés étant des esters d'acide acrylique et/ou d'acide méthacrylique, préférablement des esters en C1 à C16 d'acide acrylique et/ou d'acide méthacrylique.

3. Substrat selon la revendication 1 ou 2, le polymère durcissable (i) possédant au moins un groupe terminal alcoxysilyle de formule (I), préférablement au moins deux parmi lesdits groupes terminaux.

4. Substrat selon l'une quelconque des revendications précédentes, l'au moins un groupe alcoxysilyle terminal ou pendant étant fixé au squelette du polymère durcissable (i) via une liaison uréthane ou une liaison urée.

5. Substrat selon l'une quelconque des revendications précédentes, m étant 1 ou 3, préférablement 1.

6. Substrat selon l'une quelconque des revendications précédentes, R² étant un radical méthyle ou éthyle.

7. Substrat selon l'une quelconque des revendications précédentes, le système de résine durcissable comprenant un agent de durcissement choisi dans le groupe constitué par des tétra-alcoxyorthosilicates et des condensats partiels correspondants, des alcoxysilanes organofonctionnels, et des combinaisons correspondantes, préférablement l'agent de durcissement étant un tétra-alcoxyorthosilicate ou un condensat partiel correspondant, un alcoxysilane organofonctionnel choisi dans le groupe constitué par des amino-alcoxysilanes, des glycidoxy-alcoxysilanes, des méthacryloxy-alcoxysilanes, des carbamato-alcoxysilanes, et des alcoxysilanes dotés d'un groupe fonctionnel isocyanurate, ou une combinaison correspondante.

8. Substrat selon la revendication 7, l'agent de durcissement étant un alcoxysilane organofonctionnel comportant la fonctionnalité alcoxysilyle dans une position alpha par rapport au groupe organofonctionnel, préférablement l'agent de durcissement étant le (N,N-diéthylaminométhyl)triéthoxysilane, et la composition de revêtement étant essentiellement exempte d'un catalyseur de durcissement.

9. Substrat selon l'une quelconque des revendications précédentes, la composition de revêtement antisalissures étant exempte d'un biocide marin.

10. Substrat selon l'une quelconque des revendications précédentes, la composition de revêtement antisalissures comprenant un composé non durcissable, non volatil.

11. Substrat selon la revendication 10, le composé non durcissable, non volatil étant choisi dans le groupe constitué par des polymères fluorés, des stérols et des dérivés de stérol, et des huiles de polysiloxane modifié de manière hydrophile, préférablement dans le groupe constitué par des huiles de polysiloxane modifié de manière hydrophile.

12. Substrat selon la revendication 11, la composition de revêtement antisalissures comprenant une huile de polysiloxane modifié de manière hydrophile non durcissable, non volatile et l'huile de polysiloxane modifié de manière hydrophile non durcissable étant un polysiloxane modifié par un poly(oxyalkylène).

13. Substrat selon l'une quelconque des revendications précédentes, le polymère durcissable (i) étant exempt d'atomes de fluor.

14. Procédé pour la lutte contre l'encrassement biologique aquatique sur une surface d'un objet fabriqué par l'homme, comprenant les étapes de
(a) éventuellement, application d'une couche d'apprêt sur au moins une partie de la surface de l'objet fabriqué par l'homme ;
(b) application d'une couche d'accrochage déposée à partir d'une composition d'accrochage telle que spécifiée dans la revendication 1 ou 2 sur au moins une partie de la surface de l'objet fabriqué par l'homme, ou sur la couche d'apprêt appliquée dans l'étape (a) ;
(c) application d'une composition de revêtement antisalissures telle que spécifiée dans l'une quelconque des revendications 1 à 13 à la couche d'accrochage appliquée ;
(d) laisser durcir la composition d'accrochage et la composition de revêtement antisalissures pour former une couche d'accrochage durcie et une couche de revêtement antisalissures durcie ; et
(e) l'immersion de l'objet fabriqué par l'homme au moins partiellement dans de l'eau.
